# EUROPÄISCHE PATENTSCHRIFT

(11) **EP 1 297 734 B1**
(45) Veröffentlichungstag und Bekanntmachung des Hinweises auf die Patenterteilung: **28.02.2007**
(21) Anmeldenummer: 02102333.8
(22) Anmeldetag: 09.09.2002
(51) Int. Cl.: A01D 41/12, A01D 75/28

(54) **Erntemaschine mit von der Neigung abhängiger Vortriebsgeschwindigkeit**
Harvesting machine with an inclination-dependent rate of advance
Machine de récolte avec une vitesse d'avance qui est dépendante de l'inclinaison

(30) Priorität: 27.09.2001 US 967654
(43) Veröffentlichungstag der Anmeldung: 02.04.2003
(73) Patentinhaber: DEERE & COMPANY, Moline, Illinois 61265-8098 (US)
(72) Erfinder: Coers, Bruce Alan, Hillsdale, IL 61257 (US); Burke, Daniel James, Cordova, IL 61242 (US); Cooper, William F., Fargo, ND 58102, (US); Littke, Jerry Dean, Hillsboro, ND 58045 (US); Mertins, Karl-Heinz Otto, Davenport, IA 52807, (US)
(74) Vertreter: Holst, Sönke

(56) Entgegenhaltungen:
- EP-A- 0 631 906
- GB-A- 2 107 489
- US-A- 4 466 230
- US-A- 4 513 562
- US-A- 4 765 190
- US-A- 5 711 139
- US-A- 6 036 597

## Beschreibung

Die Erfindung betrifft eine Erntemaschine, mit im Eingriff mit dem Erdboden befindlichen Mitteln, die eingerichtet sind, die Erntemaschine mit einer Erntegeschwindigkeit über den Erdboden zu bewegen, einer Gutbearbeitungseinrichtung mit einem Antrieb, einem Durchsatzsensor, der eingerichtet ist, ein Durchsatzsignal bereitzustellen, das eine Information über den von der Erntemaschine aufgenommenen Materialfluss enthält und mit einer Steuerung, die eingerichtet ist, die Erntegeschwindigkeit abhängig vom Durchsatzsignal einzustellen.

Der Durchsatz eines Mähdreschers oder einer ähnlichen Erntemaschine wird in der Regel innerhalb eines Bereichs gehalten, in dem die Produktivität maximal ist, während eine oder mehrere Erntequalitätsvariablen, wie beispielsweise Kornverlust oder Kornbeschädigungen, auf einem Niveau gehalten werden, in dem sie für den Bediener akzeptabel sind. Eine ansteigende Vortriebsgeschwindigkeit der Erntemaschine vergrößert den Durchsatz, und mit dem steigenden Durchsatz steigt in der Regel auch der Kornverlust. Verschiedene Einrichtungen sind verfügbar, um die Menge des in den Schrägförderer oder in die Dresch- und Trenneinrichtungen eines Mähdreschers eintretenden Ernteguts zu erfassen und die Geschwindigkeit des Mähdreschers in Reaktion auf Änderungen der Materialmenge zu ändern und einen im Wesentlichen konstanten Durchsatz aufrecht zu erhalten. Bei einem Mähdrescher kann der Durchsatz abgeschätzt werden, indem der Druck am Aktor des variablen Antriebs gemessen wird, der den Rotor antreibt. Der Druck des Aktors des variablen Rotorantriebs ist eine Funktion der Zuführrate, und die Zuführrate ist im Allgemeinen bei konstantem Druck des Aktors konstant. Durch eine Verstellung der Erntegeschwindigkeit, die derart erfolgt, dass eine Zielgröße des Drucks des Aktors eingehalten wird, kann die Produktivität des Mähdreschers optimiert werden. Eine derartige Einrichtung ist in der Europäischen Patentanmeldung 02005829.3 beschrieben, die auf die vorliegende Anmelderin zurückgeht. Die Zielgröße des Drucks des Aktors des variablen Rotorantriebs kann verändert werden, wenn eine Erntequalitätsvariable über einen längeren Zeitabschnitt von einem gewünschten Qualitätszielbereich abweicht. Wenn beispielsweise der Zielkornverlust über einen Zeitabschnitt überschritten wird, während bei dem Zieldruck des Aktors gearbeitet wird, wird der Zieldruck des Aktors vermindert, um den Kornverlust zu reduzieren. Bei einer anderen Europäischen Patentanmeldung, die Priorität aus der US-Patentanmeldung 09/918,266 beansprucht, steuert eine konventionelle Geschwindigkeitssteuerung die Erntegeschwindigkeit als Funktion von Ausgaben eines oder mehrerer Sensoren einschließlich eines Durchsatzsensors, der stromab des Erntevorsatzes angeordnet ist. Wenn der Erntevorsatz hingegen abgesenkt wird, wird die Vortriebsgeschwindigkeit des Mähdreschers unmittelbar abgesenkt, um einen plötzlichen Anstieg des Materials stromab des Einlasses des Schrägförderers zu vermeiden.

Obwohl derartige Systeme, wie sie oben beschrieben sind, eine verbesserte automatische Steuerung bereitstellen, um die Produktivität eines Mähdreschers zu verbessern und die Ermüdung des Bedieners zu vermindern, bestehen noch Probleme mit ansteigenden Kornverlusten, wenn die Erntemaschine beim Arbeiten an Hängen aus der senkrechten Position heraus geneigt ist. Beispielsweise ist ein Mähdrescher derart dimensioniert, dass er mit höchster Effizienz arbeitet, wenn er beim Ernten nivelliert (horizontal ausgerichtet) ist. Wenn der Mähdrescher sich an Hängen aus der aufrechten Position heraus neigt, vermindert sich die Effizienz und Kornverluste können signifikant ansteigen. Obwohl Kornverluste an Hängen durch Verlangsamen des Mähdreschers vermindert werden können, kann der Bediener häufig die Hangwinkel nicht richtig einschätzen und die Seitenhangverluste im Voraus berechnen. Im Ergebnis ist es für den Bediener nicht ungewöhnlich, die Maschine wesentlich stärker zu verlangsamen als es nötig wäre, um die Kornverluste in Zielbereichen zu halten, so dass die Maschinenproduktivität vermindert und die Kornbeschädigungen gesteigert sind. Wenn der Bediener die Geschwindigkeit nicht dem Grad der Hangneigung entsprechend vermindert, werden die Kornverluste die Zielwerte übersteigen.

Die der Erfindung zu Grunde liegende Aufgabe wird darin gesehen, ein verbessertes Durchsatzsteuerungssystem für einen Mähdrescher bereitzustellen, bei dem die genannten Nachteile vermieden werden.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Das erfindungsgemäße System zur verbesserten Durchsatzsteuerung einer Erntemaschine, insbesondere eines Mähdreschers, umfasst einen Neigungssensor, der eingerichtet ist, die Neigung der Erntemaschine in Fahrtrichtung und/oder in seitlicher Richtung zu erfassen. Der Ausgang des Neigungssensors ist mit einer Steuerung verbunden, die die Erntegeschwindigkeit in Abhängigkeit vom gemessenen Durchsatz steuert, der durch einen oder mehrere Sensoren gemessen wird, die sich in der Regel stromab des Erntevorsatzes befinden. Wenn der Neigungssensor jedoch darauf hinweist, dass die Erntemaschine gegenüber der Horizontalen geneigt ist, wird die Erntegeschwindigkeit selbsttätig abgesenkt, um zu verhindern, dass die Kornverluste oder eine andere Erntequalitätsvariable negativ beeinflusst werden. Wenn sich die Neigung wieder vermindert und die Erntemaschine sich einer horizontalen Fläche nähert, wird wieder die normale Geschwindigkeitssteuerung aufgenommen.

Auf diese Weise wird der Bediener von der schwierigen Aufgabe entlastet, die Neigungswinkel abzuschätzen und die von der Neigung der Erntemaschine bedingten Verluste vorherzusehen. Die Erntemaschine wird nur so weit verlangsamt, wie es erforderlich ist, die Kornverluste auf einem Zielniveau zu halten, so dass die Produktivität der Maschine gesteigert ist und bei einem Mähdrescher aus zu wenig ausgenutzter Qualität resultierende Kornbeschädigungen vermindert werden. Übermäßige Kornverluste, die Folge unzureichender Verlangsamung der Erntemaschine sind, werden ebenfalls vermieden. Die erforderliche Geschwindigkeitskompensation kann automatisch sowohl für Bergaufneigungen, Bergabneigungen als auch für seitliche Hänge bereitgestellt werden.

Die Erntequalitätsvariable, beispielsweise ein mit einem entsprechenden Kornverlustumsetzer gemessener Kornverlust, kann durch die Steuerung durch selbsttätige Anpassung der Erntegeschwindigkeit innerhalb eines bestimmten Bereichs gehalten werden.

In einer bevorzugten Ausführungsform kompensiert die Steuerung den Neigungswinkel durch eine Anpassung der Zuführrate, um ein gewünschtes Verlustratenniveau aufrechtzuerhalten.

Die Steuerung kann eingerichtet sein, den Zusammenhang zwischen der Neigung, der Erntequalität (insbesondere Kornverluste) und vorzugsweise auch dem Durchsatz zu lernen, um Änderungen der Einstellungen und der Betriebsbedingungen ausgleichen zu können. Die Geschwindigkeitsverminderung an Hängen wird basierend auf dem erlernten Zusammenhang ausgewählt. Der fortdauernde Lernprozess optimiert die Geschwindigkeitsänderungen, um die Erntequalitätsvariable innerhalb gewünschter Grenzen zu halten und die Produktivität der Erntemaschine aufrechtzuerhalten, sogar wenn sich die Erntemaschineneinstellungen und die Erntebedingungen ändern.

Der Durchsatzsensor kann ein Druckumsetzer sein, der den Druck in einem zur Verstellung eines verstellbaren Antriebs der Gutbearbeitungseinrichtung eingerichteten Aktor erfasst. Dieser Druck ist ein gutes Maß für den Durchsatz. Der von der Steuerung angestrebte und aufrechterhaltene Zielwert für diesen Druck kann entsprechend der erfassten Neigung modifiziert werden.

In den Zeichnungen ist ein nachfolgend näher beschriebenes Ausführungsbeispiel der Erfindung dargestellt. Es zeigt:
- Fig. 1: eine Seitenansicht einer Erntemaschine
- Fig. 2: ein Schema eines Steuerungssystems für die Erntemaschine der Figur 1 mit Neigungsberücksichtigung, und
- Fig. 3: ein Flussdiagramm für das in Figur 2 dargestellte Steuerungssystem.

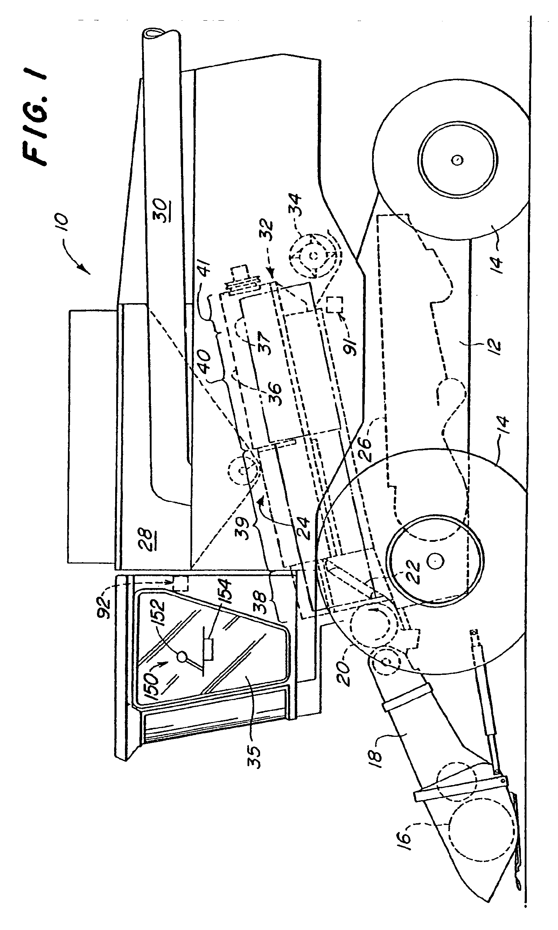

Die Figur 1 zeigt eine landwirtschaftliche Erntemaschine in Form eines Mähdreschers 10 mit einer tragenden Struktur in Form eines Rahmens 12, die mit im Eingriff mit dem Erdboden stehenden Rädern 14 versehen ist. Obwohl der Mähdrescher 10 mit Rädern dargestellt ist, könnte er auch mit zwei oder vier Gleisketten versehen sein. Ein Schneidwerk 16 wird zum Ernten von Erntegut und um es einem Schrägförderer 18 zuzuführen benutzt. Der Schrägförderer 18 enthält eine Fördereinrichtung, um das geerntete Gut einer Leittrommel 20 zuzuführen. Die Leittrommel 20 führt das Gut nach oben durch einen Einlassübergangsabschnitt 22 hindurch und einer drehbaren, zum Dreschen und Trennen eingerichteten Gutbearbeitungseinrichtung 24 zu. Die dargestellte Gutbearbeitungseinrichtung 24 ist im Mähdrescher axial angeordnet, sie könnte aber auch in anderen Orientierungen relativ zur Längsachse des Mähdreschers 10 angeordnet sein. Obwohl die vorliegende Erfindung anhand einer Gutbearbeitungseinrichtung 24 mit einem Rotor beschrieben wird, könnte sie auch an einem Mähdrescher 10 mit einer konventionellen, quer angeordneten Dreschtrommel, die mit einem Dreschkorb zusammenwirkt, verwendet werden.

Die Gutbearbeitungseinrichtung 24 drischt und trennt das geerntete Gut. Das Korn und die Spreu fallen durch Roste am Boden der Gutbearbeitungseinrichtung 24 in ein Reinigungssystem 26. Das Reinigungssystem 26 entfernt die Spreu und führt das saubere Korn einem (nicht gezeigten) Elevator für sauberes Korn zu. Der Elevator für sauberes Korn legt das Korn in einem Korntank 28 ab. Das saubere Korn im Korntank 28 kann durch einen Entladeschneckenförderer 30 einem Lastwagen oder Anhänger zugeführt werden.

Ausgedroschenes, vom Korn befreites Stroh wird von der Gutbearbeitungseinrichtung 24 durch einen Auslass 32 einer Auswurftrommel 34 zugeführt. Die Auswurftrommel 34 stößt das Stroh wiederum an der Rückseite des Mähdreschers 10 aus. Es ist anzumerken, dass die Auswurftrommel 34 das vom Korn befreite Gut auch direkt einem Strohhäcksler zuführen könnte. Der Betrieb des Mähdreschers 10 wird von einer Bedienerkabine 35 aus gesteuert.

Die Gutbearbeitungseinrichtung 24 umfasst ein zylindrisches Rotorgehäuse 36 und einen im Rotorgehäuse 36 angeordneten, drehbaren Rotor 37. Der vordere Teil des Rotors 37 und das Rotorgehäuse 36 definieren einen Beschickungsabschnitt 38. Stromab des Beschickungsabschnitts 38 sind ein Dreschabschnitt 39, ein Trennabschnitt 40 und ein Auslassabschnitt 41. Der Rotor 37 ist im Beschickungsabschnitt 38 mit einer konischen Rotortrommel versehen, die wendelförmige Beschickungselemente zum Eingreifen in Gut aufweist, das sie von der Leittrommel 20 und vom Einlassübergangsbereich 22 erhält. Unmittelbar stromab des Beschickungsabschnitts 38 befindet sich der Dreschabschnitt 39. Im Dreschabschnitt 39 weist der Rotor 37 eine zylindrische Rotortrommel auf, die mit einer Anzahl von Dreschelementen versehen ist, um das vom Beschickungsabschnitt 38 erhaltene Gut zu dreschen. Stromab des Dreschabschnitts 39 befindet sich der Trennabschnitt 40, in dem das im gedroschenen Gut noch enthaltene Korn freigesetzt wird und durch ein bodenseitiges Rost im Rotorgehäuse 36 hindurch in das Reinigungssystem 28 fällt. Der Trennabschnitt 40 geht in den Auslassabschnitt 41 über, in dem das vom Korn befreite Gut (Stroh) aus der Gutbearbeitungseinrichtung 24 ausgestoßen wird.

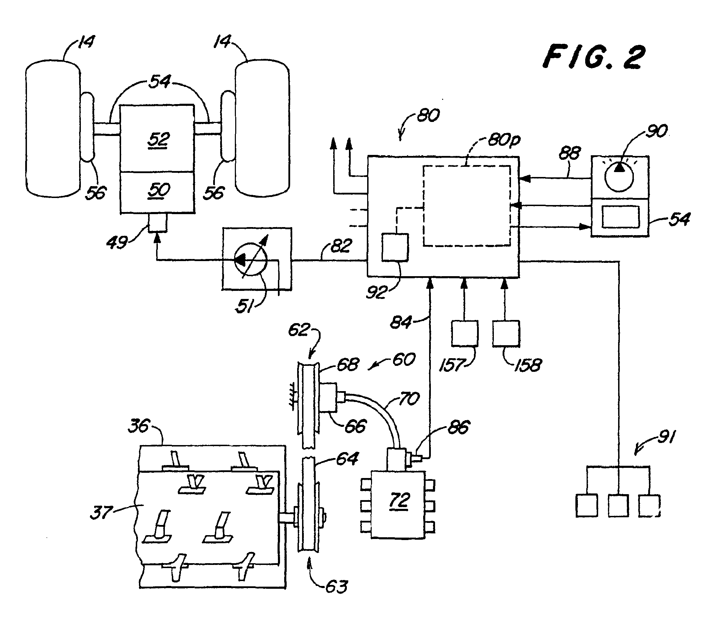

Die vorderen Räder 14 des Mähdreschers 10 werden durch einen hydrostatischen Motor 49 angetrieben, der mit einem hydrostatischen Getriebe 50 verbunden ist (Figur 2). Der Motor 49 wird auf konventionelle Weise durch eine hydrostatische Pumpe 51 angetrieben, die durch einen Verbrennungsmotor angetrieben wird. Die Pumpe 51 ist mit verstellbaren Taumelplatten versehen, die die Ausgangsgeschwindigkeit und die Drehrichtung des Getriebes 50 steuern. Elektromagnetische Steuerventile verstellen die Positionen der Taumelplatten. Das hydrostatische Getriebe 50 treibt wiederum ein Getriebe 52 an. Zwei treibende Wellen 54 erstrecken sich vom Getriebe 52 nach außen und treiben Endantriebe 56 der vorderen Räder 14 an. Die lenkbaren hinteren Räder 14 können ebenfalls durch direkt an den Rädern befestigte Radmotore angetrieben werden. Die Geschwindigkeit der Radmotore kann durch das unten beschriebene Durchsatzsteuerungssystem gesteuert werden.

Ein verstellbarer Antrieb 60 mit Drehmomentsensor treibt den Rotor 37 an. Derselbe Verbrennungsmotor, der auch das hydrostatische Getriebe 50 antreibt, treibt auch den verstellbaren Antrieb 60 an. Der verstellbare Antrieb 60 umfasst eine antreibende Riemenscheibe 62 mit verstellbarem Durchmesser und eine angetriebene Riemenscheibe 63 mit verstellbarem Durchmesser. Ein Riemen 64 erstreckt sich zwischen der antreibenden Riemenscheibe 62 und der angetriebenen Riemenscheibe 63, um Rotationsleistung auf den Rotor 37 zu übertragen. Ein Hydraulikzylinder 66 steuert den Durchmesser der antreibenden Riemenscheibe 62, und die angetriebene Riemenscheibe 63 ist durch eine Feder vorgespannt, um die Riemenspannung aufrechtzuerhalten. Der Hydraulikzylinder 66 ist mit der antreibenden Riemenscheibe 62 gekoppelt und bewegt die Stirnplatten 68 der Riemenscheibe 62 nach innen bzw. außen, um den wirksamen Durchmesser der Riemenscheibe 62 gegenüber dem Riemen 64 zu steuern. Durch eine Änderung des wirksamen Durchmessers der Riemenscheibe wird die effektive Geschwindigkeit der angetriebenen Riemenscheibe 63 verändert. Durch eine Hydraulikleitung 70 wird dem Hydraulikzylinder 66 unter Druck stehende Hydraulikflüssigkeit von einem Ventilzusammenbau 72 zugeführt. Der Rotor 37 wird durch die Riemenscheiben variablen Durchmessers mit einer konstanten, ausgewählten Rotorgeschwindigkeit angetrieben. Das vom Riemen 64 und den Riemenscheiben 62, 63 übertragene Drehmoment variiert mit dem Gutdurchsatz.

Eine elektronische Steuerung 80 steuert die Erntegeschwindigkeit des Mähdreschers 10 durch Steuern der elektromagnetischen Steuerventile an der hydrostatischen Pumpe 51 über die Leitung 82, um die Positionen der Taumelplatten in der Pumpe 51 einzustellen. Die Steuerung 80 empfängt ein aktuelles Hydraulikdrucksignal oder einen Druck des Aktors des variablen Rotorantriebs über die Leitung 84 von einem Hydraulikdrucksensor 86. Der Druck des Aktors des variablen Rotorantriebs ist eine Funktion der Zuführrate, und die Zuführrate ist im Allgemeinen bei konstantem Druck des Aktors konstant. Indem daher die Vortriebsgeschwindigkeit des Mähdreschers 10 derart eingestellt wird, dass ein vorausgewählter Druck des Aktors des variablen Rotorantriebs aufrechterhalten wird, bleibt der Durchsatz im Wesentlichen konstant. Der Hydraulikdrucksensor 86 fühlt den Hydraulikdruck im verstellbaren Antrieb 60. Der Hydraulikdruck im verstellbaren Antrieb 60 steht mit dem Durchsatz in Beziehung, der wiederum Erntequalitätsvariablen wie Kornverlust, Kornbeschädigung und Anteil von Fremdbestandteilen im Korntank beeinflusst.

Die Steuerung 80 empfängt über eine Leitung 88 von einer Bedienereingabeeinrichtung 90 in der Bedienerkabine 35 oder einem anderen Eingabegerät eine Erntequalitätsniveausignaleingabe, wie beispielsweise eine akzeptable Kornverlustrate. Ein Erntequalitätsumsetzer 91, der in Figur 1 als ein nahe des Auslasses 32 angeordneter Verlustkornsensor gezeigt ist, stellt der Steuerung 80 Erntequalitätssignale bereit. Ein Neigungssensor 92 ist an einer geeigneten Stelle des Rahmens 12 (Figur 1) abgestützt und stellt der Steuerung 80 Signale bereit, die den Betrag der Neigung des Mähdreschers 10 aus der im Wesentlichen nivellierten oder horizontalen Position, wie sie in Figur 1 dargestellt ist, anzeigen. Vorzugsweise stellt der Neigungssensor 92 der Steuerung Informationen über den seitlichen Neigungswinkel und den Neigungswinkel in Fahrtrichtung bereit. Wie in Figur 2 dargestellt, ist der Neigungssensor 92 direkt in die Schaltkreisplatte der Steuerung 80 integriert, um die Aufwändungen für einen externen Sensor, ein separates Gehäuse und eine Verdrahtung zu vermeiden.

Eine in der Bedienerkabine 35 angeordnete Bedienerkonsole 150 umfasst konventionelle Bedienereingabeeinrichtungen einschließlich eines Hydroverschiebehebels 152 zur manuellen Steuerung des Geschwindigkeitsbereichs und der Ausgangsgeschwindigkeit des hydrostatischen Getriebes 50. Ein Bedienerschnittstellengerät 154 in der Bedienerkabine 35 erleichtert Eingaben von Informationen in ein Prozessorsystem 80p, um eine automatische Geschwindigkeitssteuerung und vielfältige andere Steuerfunktionen für den Mähdrescher 10 bereitzustellen. Ausgaben von verschiedenen an Bord befindlichen Sensoren 157 und Mikrocontrollern 158 werden von dem Bedienerschnittstellengerät 154 bereitgestellt. Der Bediener kann verschiedene Typen von Informationen über die Eingabeleitungen 88 und 154a eingeben, einschließlich der Gutart, des Orts, des Ertrags, des akzeptablen Kornverlusts, Beschädigungen, Fremdanteil und dergleichen.

Für den Betrieb des Mähdreschers 10 wird der Steuerung 80 eine gewünschte Erntequalitätsvariable, wie Verlustrate, unter Verwendung der Bedienereingabeeinrichtung 90 zugeführt. Basierend auf anfänglichen Voreinstellungseinträgen (oder auf gelernten Zusammenhängen, wie weiter unten detailliert beschrieben) berechnet die Steuerung 80 einen anfänglichen Zieldruck des Aktors des variablen Rotorantriebs für die Einstellung der Bedienereingabeeinrichtung 90. Die Steuerung 80 empfängt das aktuelle Drucksignal vom Hydraulikdruckumsetzer 86 und ein aktuelles Verlustratensignal oder ein anderes Erntequalitätssignal vom Erntequalitätsumsetzer 91 und reguliert die Vorwärtsgeschwindigkeit des Mähdreschers 10, so dass sich der Druck des Aktors des variablen Rotorantriebs auf das anfängliche Zielniveau einstellt. Die Steuerung 80 fragt den Erntequalitätsumsetzer 91 ab und stellt fest, ob sich die Verlustrate für den anfänglichen Zielwert des Druck des Aktors bei dem gewünschten Niveau befindet, während der Mähdrescher bei ebenen Bedingungen arbeitet. Wenn die Verlustrate über einen ausgedehnten Zeitraum größer ist, als sie von der Steuerung 80 für den anfänglichen Zielwert des Drucks des Aktors ausgewählt wurde, wird der Zieldruck des Aktors dadurch nach und nach vermindert, dass die Vortriebsgeschwindigkeit des Mähdreschers vermindert wird, bis die gewünschte Verlustrate erreicht ist, und ein neuer Zielwert des Drucks des Aktors wird festgelegt. Wenn die Verlustrate über einen ausgedehnten Zeitraum kleiner ist als die eingegebene Rate, wird der Zieldruck des Aktors dadurch nach und nach vergrößert, dass die Vortriebsgeschwindigkeit des Mähdreschers erhöht wird, bis die gewünschte Verlustrate erreicht ist. Die Steuerung 80 aktualisiert den Zieldruck des Aktors für den Betrieb in der Ebene während des Erntens kontinuierlich, um sich ändernde Bedingungen zu kompensieren.

Wenn sich der Mähdrescher 10 aus der nivellierten Lage neigt und die Steuerung 80 ein Neigungssignal vom Neigungssensor 92 erhält, wird die Steuerung 80 den Mähdrescher 10 verlangsamen, um den Durchsatz zu vermindern und dadurch einen Anstieg der Erntequalitätsvariablen zu vermeiden. Der Prozessor 80p speichert oder berechnet eine Information über die erwarteten Qualitätsvariablen als Funktion der Neigungswinkel und des Durchsatzes. Für einen gegebenen Neigungswinkel kann daher der Zielwert des Drucks des Aktors verändert werden, um die Mähdreschergeschwindigkeit zu ändern, so dass die Qualitätsvariable im Wesentlichen konstant bleiben wird. Bei einer Ausführungsform der Erfindung lernt der Prozessor 80p den Zusammenhang zwischen der Neigung, der Erntequalität und dem Durchsatz und aktualisiert fortdauernd die gespeicherte Information, so dass Durchsatzeinstellungen schnell und genau durchgeführt werden können, sogar bei sich ändernden Erntegutund Erntebedingungen.

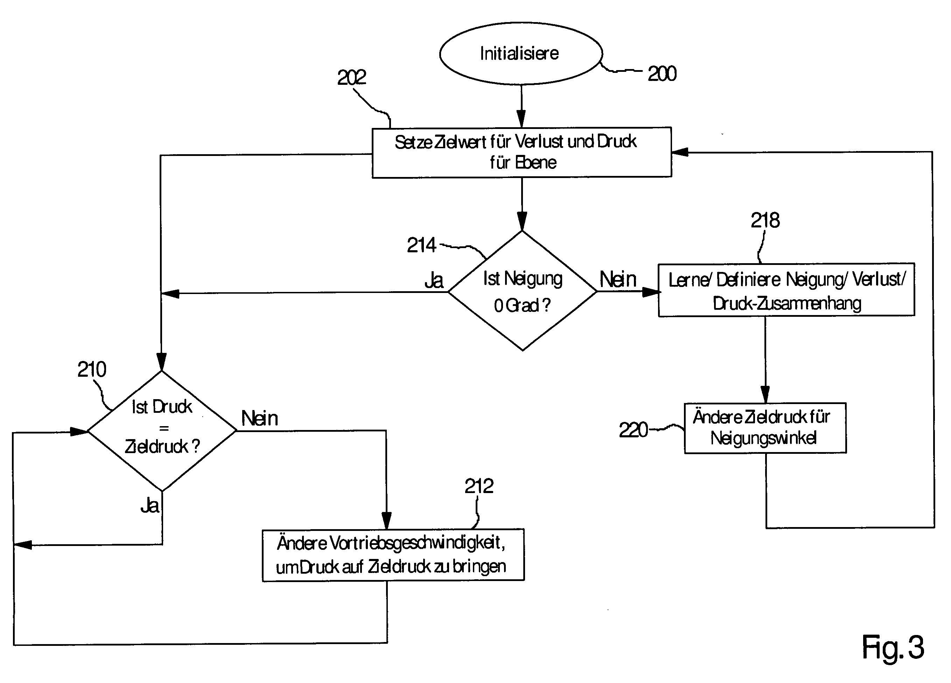

In der Figur 3 ist ein Flussdiagramm eines Beispiels für den Betrieb des Prozessors 80p dargestellt. Nachdem die Zuführratensteuerung aktiviert ist, werden bei 202 Zielwerte gesetzt für den Durchsatz und die Kornverluste, und das Durchsatzziel wird, wie oben beschrieben, geändert um den gewünschten Kornverlust zu erreichen. Wenn der gemessene Verlust über eine ausgedehnte Zeitperiode beständig hoch oder niedrig ist, wird der Zieldruck des Aktors langsam angepasst, um den Kornverlust auf das gewünschte Niveau zu bringen. Andere Erntequalitätseingaben können auch zur Anpassung des Zieldrucks verwendet werden, wenn gewünscht. Anfängliche Zielwerte können durch den Bediener unter Verwendung des Bedienerschnittstellengeräts 154 basierend auf Wissen und Erfahrung eingegeben werden, oder im Speicher abgelegte bzw. für das jeweilige Feld und die jeweilige Gutart oder für die unmittelbar vorhergehenden Erntebedingungen berechnete Zielwerte können ausgewählt werden.

Der Durchsatz wird als eine Funktion des Drucks im Aktor des variablen Antriebssystems (Hydraulikdruckumsetzer 86) gemessen und bleibt bei konstantem Druck im Wesentlichen konstant. Während des Betriebs des Mähdreschers wird der Druck im Aktor bei 210 kontinuierlich überwacht. Wenn der Druck im Aktor vom gewünschten Bereich abweicht, wird die Vortriebsgeschwindigkeit des Mähdreschers 10 bei 212 gesteigert oder vermindert, abhängig davon, ob der Druck oberhalb oder unterhalb des bei 202 gesetzten Zielniveaus liegt. Außerdem wird bei 214 der Neigungssensor 92 abgefragt, um festzustellen, ob sich der Mähdrescher aus einer nivellierten Bedingung (Ebene) heraus neigt. Wenn bei 214 eine Neigung des Mähdreschers 10 nachgewiesen wird, bestimmt der Prozessor 80p bei 218 eine Relation zwischen dem Verlust, dem Druck des Aktors und der Neigung, um eine Korrelationsgleichung zu bestimmen bzw. im Speicher eine Karte der Beziehung zwischen dem Verlust und dem Druck im Aktor als Funktion der Neigung zu speichern. Wenn eine Neigung des Mähdreschers 10 nachgewiesen wird und ein angewachsener Kornverlust (oder anderes Absinken der Erntequalität) nachgewiesen wird, ändert der Prozessor 80p bei 220 den Zieldruck des Aktors. Dieser Prozess ermöglicht es der Steuerung 80, die Geschwindigkeit anzupassen, bis der Prozessor 80p die richtigen Beziehungen zwischen der Neigung, den Verlusten und dem Zieldruck des Aktors identifiziert und einen konstanten Kornverlust durch sofortiges Ändern des Zielwerts entsprechend den gelernten Beziehungen aufrechterhalten kann.

## Patentansprüche

1. Erntemaschine, mit im Eingriff mit dem Erdboden befindlichen Mitteln, die eingerichtet sind, die Erntemaschine mit einer Erntegeschwindigkeit über den Erdboden zu bewegen, einer Gutbearbeitungseinrichtung mit einem Antrieb (60), einem Durchsatzsensor, der eingerichtet ist, ein Durchsatzsignal bereitzustellen, das eine Information über den von der Erntemaschine aufgenommenen Materialfluss enthält und mit einer Steuerung (80), die eingerichtet ist, die Erntegeschwindigkeit abhängig vom Durchsatzsignal einzustellen, **dadurch gekennzeichnet, dass** die Steuerung (80) mit einem Neigungssensor (92) verbunden ist, der eingerichtet ist, ein Neigungssignal bereitzustellen, das eine Information über die Neigung der Erntemaschine enthält, und dass die Steuerung (80) betreibbar ist, die Erntegeschwindigkeit abhängig vom Neigungssignal einzustellen.

2. Erntemaschine nach Anspruch 1, **dadurch gekennzeichnet, dass** die Steuerung (80) betreibbar ist, die Erntegeschwindigkeit derart einzustellen, dass eine Erntequalitätsvariable innerhalb eines bestimmten Bereichs bleibt, wenn die Erntemaschine Bodenerhebungen überfährt.

3. Erntemaschine nach Anspruch 2, **dadurch gekennzeichnet, dass** die Erntequalitätsvariable der Kornverlust ist, und dass die Steuerung (80) mit einem Kornverlustumsetzer (91) verbunden ist, der eingerichtet ist, der Steuerung (80) ein Kornverlustsignal zuzuführen.

4. Erntemaschine nach einem der Ansprüche 1 bis 3, **dadurch gekennzeichnet, dass** die Steuerung (80) eingerichtet ist, einen Zielwert für den Durchsatz beim Betrieb der Erntemaschine auf einer Ebene zu definieren und den Zielwert für den Durchsatz abhängig vom Neigungssignal zu ändern, wenn die Erntemaschine an einem Hang betrieben wird.

5. Erntemaschine nach einem der Ansprüche 2 bis 4, **dadurch gekennzeichnet, dass** die Steuerung (80) eingerichtet ist, einen Zusammenhang zwischen der Neigung und der Erntequalität zu lernen, und dass die Steuerung (80) betreibbar ist, auf den gelernten Zusammenhang zu reagieren.

6. Erntemaschine nach Anspruch 5, **dadurch gekennzeichnet, dass** die Steuerung (80) betreibbar ist, auf eine Änderung der Erntequalitätsvariablen, des Durchsatzsignals und des Neigungssignals zu reagieren und einen Zusammenhang zwischen der Erntequalität, dem Durchsatzsignal und dem Neigungssignal zu lernen, und dass die Steuerung (80) betreibbar ist, die Erntegeschwindigkeit anhand des gelernten Zusammenhangs derart einzustellen, dass die Erntequalitätsvariable auf einem im Wesentlichen konstanten Wert bleibt.

7. Erntemaschine nach Anspruch 5 oder 6, **dadurch gekennzeichnet, dass** die Steuerung (80) betreibbar ist, einen Zielwert für den Durchsatz zu setzen und den Zielwert für den Durchsatz entsprechend des gelernten Zusammenhangs anzupassen.

8. Erntemaschine nach einem der Ansprüche 1 bis 7, **dadurch gekennzeichnet, dass** der Durchsatzsensor einen Druckumsetzer (86) umfasst, der den Druck in einem zur Verstellung eines verstellbaren Antriebs der Gutbearbeitungseinrichtung eingerichteten Aktor erfasst.

9. Erntemaschine nach einem der Ansprüche 1 bis 8, **dadurch gekennzeichnet, dass** der Neigungssensor (92) auf seitliche Neigung und/oder Neigung in Fahrtrichtung reagiert.

10. Erntemaschine nach einem der vorhergehenden Ansprüche, **dadurch gekennzeichnet, dass** sie ein Mähdrescher (10) ist.

11. Verfahren zur Steuerung des Betriebs einer Erntemaschine zum Ernten eines Guts auf einem Feld mit Neigungen, wobei eine Erntequalitätsvariable der Erntemaschine von einer Neigung der Erntemaschine aus der Horizontalen abhängt, die Erntemaschine eine elektronische Steuerung (80) zur selbsttätigen Steuerung der Erntegeschwindigkeit aufweist, und die Erntegeschwindigkeit den Durchsatz beeinflusst, von dem wiederum die Erntequalität abhängt, mit folgenden Schritten:
Feststellen einer gewünschten Geschwindigkeit, die zumindest teilweise vom Durchsatz abhängt,
Aufrechterhalten der Erntegeschwindigkeit im Wesentlichen auf der gewünschten Geschwindigkeit,
**dadurch gekennzeichnet, dass** die Neigung der Erntemaschine erfasst wird, und
dass die Erntegeschwindigkeit als Funktion der gemessenen Neigung der Erntemaschine geändert wird, um Änderungen in der Erntequalitätsvariablen zu vermindern, wenn die Erntemaschine sich auf den Neigungen aus der Horizontalen heraus neigt.

## Claims

1. Harvester having means which are situated in engagement with the ground and are equipped to move the harvester over the ground at a harvesting speed, a crop processing device with a drive (60), a throughput sensor which is equipped to provide a throughput signal which contains information relating to the material flow received by the harvester, and having a control unit (80) which is equipped to adjust the harvesting speed as a function of the throughput signal, **characterised in that** the control unit (80) is connected to an inclination sensor (92) which is equipped to provide an inclination signal which contains information relating to the inclination of the harvester, and **in that** the control unit (80) can be operated to adjust the harvesting speed as a function of the inclination signal.

2. Harvester according to claim 1, **characterised in that** the control unit (80) can be operated to adjust the harvesting speed such that a harvesting quality variable remains within a specific range when the harvester travels over rises in the ground.

3. Harvester according to claim 2, **characterised in that** the harvesting quality variable is the grain loss, and **in that** the control unit (80) is connected to a grain loss transponder (91) which is equipped to supply a grain loss signal to the control unit (80).

4. Harvester according to one of the claims 1 to 3, **characterised in** the control unit (80) is equipped to define a target value for the throughput during operation of the harvester on the level and to change the target value for the throughput as a function of the inclination signal when the harvester is operated on a slope.

5. Harvester according to one of the claims 2 to 4, **characterised in that** the control unit (80) is equipped to learn a correlation between the inclination and the harvesting quality and **in that** the control unit (80) can be operated to react to the learnt correlation.

6. Harvester according to claim 5, **characterised in that** the control unit (80) can be operated to react to a change in the harvesting quality variable in the throughput signal and in the inclination signal and to learn a correlation between the harvesting quality, the throughput signal and the inclination signal, and **in that** the control unit (80) can be operated to adjust the harvesting speed with reference to the learnt correlation such that the harvesting quality variable remains at a substantially constant value.

7. Harvester according to claim 5 or 6, **characterised in that** the control unit (80) can be operated to set a target value for the throughput and to adapt the target value for the throughput corresponding to the learnt correlation.

8. Harvester according to one of the claims 1 to 7, **characterised in that** the throughput sensor comprises a pressure transponder (86) which detects the pressure in an actuator which is equipped to adjust an adjustable drive of the crop processing device.

9. Harvester according to one of the claims 1 to 8, **characterised in that** the inclination sensor (92) reacts to lateral inclination and/or inclination in the direction of travel.

10. Harvester according to one of the preceding claims, **characterised in that** it is a combine harvester (10).

11. Method for controlling the operation of a harvester for harvesting crop in a field with inclines, a harvesting quality variable of the harvester being a function of an inclination of the harvester relative to the horizontal, the harvester having an electronic control unit (80) for automatic control of the harvesting speed, and the harvesting speed influencing the throughput, of which in turn the harvesting quality is a function, with the following steps:
determining a desired speed which is a function at least partially of the throughput,
maintaining the harvesting speed substantially at the desired speed,
**characterised in that** the inclination of the harvester is detected, and
**in that** the harvesting speed is changed as a function of the measured inclination of the harvester, in order to avoid changes in the harvesting quality variable when the harvester is inclined relative to the horizontal on the inclines.

## Revendications

1. Machine de récolte, comportant des moyens en prise avec le sol, qui sont conçus pour déplacer la machine de récolte sur le sol avec une vitesse de récolte, un dispositif de traitement des végétaux récoltés avec un système d'entraînement (60), un capteur de débit, qui est conçu pour délivrer un signal de débit qui contient une information sur le flux des végétaux ramassés par la machine de récolte, et un dispositif de commande (80) qui est conçu pour régler la vitesse de récolte en fonction du signal de débit, **caractérisée en ce que** le dispositif de commande (80) est relié à un capteur d'inclinaison (92) qui est conçu pour délivrer un signal d'inclinaison qui contient une information sur l'inclinaison de la machine de récolte et **en ce que** le dispositif de commande (80) peut être utilisé pour régler la vitesse de récolte en fonction du signal d'inclinaison.

2. Machine de récolte selon la revendication 1, **caractérisée en ce que** le dispositif de commande (80) peut être utilisé pour régler la vitesse de récolte de telle sorte qu'une variable de la qualité de récolte reste à l'intérieur d'une fourchette déterminée lorsque la machine de récolte passe sur des bosses du sol.

3. Machine de récolte selon la revendication 2, **caractérisée en ce que** la variable de la qualité de récolte est la perte des grains et **en ce que** le dispositif de commande (80) est relié à un convertisseur de perte de grains (91) qui est conçu pour acheminer un signal de perte de grains vers le dispositif de commande (80).

4. Machine de récolte selon l'une quelconque des revendications 1 à 3, **caractérisée en ce que** le dispositif de commande (80) est conçu pour définir une valeur cible du débit en cours de service de la machine de récolte sur un niveau plan et pour modifier la valeur cible du débit en fonction du signal d'inclinaison lorsque la machine de récolte est utilisée sur une pente.

5. Machine de récolte selon l'une quelconque des revendications 2 à 4, **caractérisée en ce que** le dispositif de commande (80) est conçu pour apprendre une corrélation entre l'inclinaison et la qualité de récolte et **en ce que** le dispositif de commande (80) peut être utilisé pour réagir à la corrélation apprise.

6. Machine de récolte selon la revendication 5, **caractérisée en ce que** le dispositif de commande (80) peut être utilisé pour réagir à une variation de la variable de la qualité de récolte, du signal de débit et du signal d'inclinaison et pour apprendre une corrélation entre la qualité de récolte, le signal de débit et le signal d'inclinaison, et **en ce que** le dispositif de commande (80) peut être utilisé pour régler la vitesse de récolte à l'appui de la corrélation apprise, de telle sorte que la variable de la qualité de récolte est maintenue à une valeur sensiblement constante.

7. Machine de récolte selon la revendication 5 ou 6, **caractérisée en ce que** le dispositif de commande (80) peut être utilisé pour définir une valeur cible du débit et pour adapter la valeur cible du débit en fonction de la corrélation apprise.

8. Machine de récolte selon l'une quelconque des revendications 1 à 7, **caractérisée en ce que** le capteur de débit comporte un convertisseur de pression (86), qui enregistre la pression dans un actionneur conçu pour déplacer un système d'entraînement réglable du dispositif de traitement des végétaux récoltés.

9. Machine de récolte selon l'une quelconque des revendications 1 à 8, **caractérisée en ce que** le capteur d'inclinaison (92) réagit à une inclinaison latérale et/ou une inclinaison dans la direction de déplacement.

10. Machine de récolte selon l'une quelconque des revendications précédentes, **caractérisée en ce qu'**il s'agit d'une moissonneuse-batteuse (10).

11. Procédé de commande du fonctionnement d'une machine de récolte destiné à récolter des végétaux sur un champ avec des inclinaisons de terrain, une variable de la qualité de récolte de la machine de récolte dépendant d'une inclinaison de la machine de récolte hors de l'horizontale, la machine de récolte comportant un dispositif de commande (80) électronique pour la commande automatique de la vitesse de récolte, et la vitesse de récolte influant sur le débit, duquel dépend également la qualité de récolte, comportant les étapes suivantes :
- détection d'une vitesse souhaitée, qui dépend au moins en partie du débit,
- maintien de la vitesse de récolte sensiblement à la vitesse souhaitée,
**caractérisé**
- **en ce que** l'inclinaison de la machine de récolte est détectée, et
- **en ce que** la vitesse de récolte en tant que fonction de l'inclinaison mesurée de la machine de récolte est modifiée pour empêcher des variations dans la variable de la qualité de récolte lorsque la machine de récolte s'incline hors de l'horizontale sur les inclinaisons du terrain.
